# EUROPEAN PATENT APPLICATION

(11) **EP 1 918 796 A2**
(43) Date of publication of application: **07.05.2008**
(21) Application number: 07118760.3
(22) Date of filing: 18.10.2007
(51) Int. Cl.: G05B 19/4067

(54) **Numerical controller with machining resume function**

(30) Priority: 30.10.2006 JP 2006293946; 22.03.2007 JP 2007075279
(71) Applicant: FANUC LTD, Minamitsuru-gun, Yamanashi 401-0597 (JP)
(72) Inventor: MOCHIDA, Takeshi, Minamitsuru-gun, Yamanashi 401-0511 (JP); MIYAJIMA, Keiichiro Fanuk Manshonharimomi, Minamitsuru-gun, Yamanashi 401-0511 (JP); FUJIWARA, Kohji Fanuc Dai3virakaramatsu, Minamitsuru-gun, Yamanashi 401-0511 (JP)
(74) Representative: Billington, Lawrence Emlyn

(57) **Abstract**

A numerical controller with a machining resume function, in which time necessary to resume machining is reduced without increasing memory capacity. A program portion such as a subprogram to be skipped, which is not required to execute for restoring an internal status of the numerical controller at the time point of machining suspension is registered by number or the like. When the internal stare is restored, only if the read-out block is not the program portion to be skipped, execution is carried out without operating a machine, and the internal status including a coordinate position of the machine and the like is updated and stored. A pointer indicating a block position is also updated. If it is determined that the pointer becomes equal to a pointer value at the time point of machining suspension, and that the suspended block is reached, the internal status such as interpolation information which is stored at the machining suspension is restored, and the machining is resumed. Since the unnecessary program is skipped, processing time can be reduced, and less memory capacity is required.

## Description

### BACKGROUND OF THE INVENTION

### 1. Field of the Invention

The present invention relates to a numerical controller for controlling a machine tool, and more specifically to a numerical controller with a machining resume function for resuming machining after machining is suspended in the middle of the machining.

### 2. Description of Related Art

Generally, in order to resume the machining after the machining is suspended, the numerical controller for controlling a machine tool is provided with a machining resume function that accurately restores the internal status of the numerical controller, including the block of an execution program, a machine position, interpolation data, etc., to the status at the time point of machining suspension, and resumes the machining from where the machining is suspended.

A well-known machining resume function, for example, while a machining program is executed, stores in storage means a value of a pointer P which indicates a position at which a block after the next of the executed block is read out, and an internal status of block analysis data of the block following the executed block (data in which a program block is analyzed) BD, and command data of the executed block (command data for carrying out the execution according to the analysis data) CD. When the machining is suspended and is later intended to be resumed, the machining resume function applies the value of the pointer P which has been stored in the storage means to the value of the pointer P of the position at which the machining program is analyzed, sets the analysis data BD that has been stored as program analysis data, and also sets the command data CD. In this manner, the machining resume function thoroughly restores the internal status at the time point of machining suspension and resumes the machining (see JP 7-152416A).

Another well-known machining resume function stores a program number, a sequence number, a block number, G code, M code, S code, and T code in execution at the time point of machining suspension when the machining is suspended. When the machining is resumed, the machining resume function inputs the stored information at the time point of machining suspension, implements the search of a program under the execution program number, and resumes the machining according to the stored information (see JP 2-151909A).

It is preferable that a machining resume function be capable of efficiently resuming the machining with a less burden on a numerical controller. According to the invention described in JP 7-152416A, during a regular machining operation, every time the block of the machining program is analyzed, the analysis data is stored, and the command data is prepared on the basis of the analysis data. Each time the command data is prepared, the command data also needs to be stored. Due to the machining resume function, it is required to store extra analysis and command data. This complicates processing, elongates the processing time, and also increases the memory capacity required for storing the data.

The invention described in JP 2-151909A requires the processing of storing the internal status at the time point of machining suspension, and yet is capable of restoring the internal status at the time point of machining suspension in the numerical controller without requiring extra memory and addressing the machining resume function during the regular machining operation. However, the invention is still disadvantageous in that it takes a large amount of time to resume the machining depending upon the length of the program and the number of times of execution of a subprogram call.

### SUMMARY OF THE INVENTION

The present invention provides a numerical controller with a machining resume function capable of resuming machining in a short time without increasing a memory capacity of the numerical controller.

A numerical controller of the present invention controls a machine tool to perform machining according to a machining program and has a function of resuming the machining from a position where the machining is suspended. According to one aspect of the present invention, the numerical controller comprises: skip-information storage means storing skip information indicative of blocks of the machining program unnecessary to be executed for restoring an internal status of the numerical controller at the time when the machining is suspended; interpolation-information storing means for storing information on interpolation performed according to a command of the block in execution in the machining program; dry-running means for successively executing commands of blocks other than the blocks indicated by the skip information stored by the skip-information storage means from beginning of the machining program without running the machine tool to the block in which the machining program is suspended, in response to a machining resume command after the suspension of the machining; and means for restoring the information on interpolation stored by the interpolation-information storing means and resuming the machining when the execution of the machining program by the dry-running means is completed to the block in which the machining program is suspended.

According to another aspect of the present invention, the numerical controller comprises: skip-information storage means storing skip information indicative of blocks of the machining program unnecessary to be executed for restoring an internal status of the numerical controller at the time when the machining is suspended; program-information storing means for storing information on the machining program in execution; interpolation-information storing means for storing information on interpolation performed according to a command of the block in execution in the machining program; skip-block determination means for determining whether or not a block read from the machining program is to be skipped based on the skip information stored in the skip-information storage means; dry-running means for successively reading blocks of the machining program indicated by the information stored by the program-information storing means from beginning of the machining program and executing commands of blocks other than the blocks determined to be skipped by the skip-block determination means without running the machine, in response to a machining resume command after the suspension of the machining; suspended-block determination means for determining whether or not the execution of the machining program by the dry-running means is completed to the block in which the machining is suspended based on the information stored by the program-information storing means; and interpolation-information restoring means for restoring the information on interpolation stored by the interpolation-information storing means when it is determined by the suspended-block determination means that the execution of the machining program by the dry-running means is completed to the block in which the machining is suspended, wherein the machining is resumed based on information on the suspended block and the information on interpolation restored by the interpolation-information restoring means.

The information stored by the program-information storing means may include a main program number in execution, a pointer value indicative of the block in execution and the number of blocks other than the blocks to be skipped determined by the skip-block determination means.

The skip information stored in the skip-information storage means may include a sequence number and/or a subprogram number.

According to still another aspect of the present invention, the numerical controller controls a machine tool to perform machining according to a machining program in which blocks to be skipped in a dry-running mode are designated and comprises: program-information storing means for storing information on machining program in execution; interpolation-information storing means for storing information on interpolation performed according to a command of a block in execution in the machining program; means for storing a status of the dry-running mode in which the machining program is executed without running the machine tool so as to resume the machining after the suspension of the machining; suspended-block determination means for determining whether or not the machining program is executed to the block in which the machining is suspended, in the dry-running mode after the suspension of the machining; dry-running means for successively reading blocks of the machining program indicated by the information stored by the program-information storing means from beginning of the machining program and executing the read blocks in the dry-running mode while skipping the blocks designated to be skipped by the machining program to the block in which the machining is suspended, which is determined by the suspended-block determination means, in response to a machining resume command after the suspension of the machining; interpolation-information restoring means for restoring the information on interpolation stored by the interpolation-information storing means when the execution of the machining program by the dry-running means is completed to the block in which the machining is suspended; and machining resuming means for resuming the machining by switching the dry-running mode to a regular running mode after the information on interpolation is restored by the interpolation-information restoring means.

The program-information storing means may store a pointer value indicative of the block in execution only when the block other than the blocks designated to be skipped is executed in regular running mode, and the suspended-block determination means may determine the block in which the machining is suspended based on the stored pointer value.

The program-information storing means may store in the regular running mode the number of blocks other than blocks designated to be skipped, and the suspended-block determination means may determine the block in which the machining is suspended based on the number of blocks stored by the program-information storing means and the number of blocks executed in the dry-running mode.

The present invention does not require a particularly large memory capacity for the machining resume function and is capable of resuming the machining in a short time.

### BRIEF DESCRIPTION OF THE DRAWINGS

FIG. 1 is a schematic view of a numerical controller that controls a machine tool according to an embodiment of the present invention;
FIG. 2 is a flowchart showing algorithm of machining program execution processing that is executed by a processor of a numerical controller according to a first embodiment of the present invention;
FIG. 3 is a flowchart showing algorithm of processing for restoring an internal status of the numerical controller at the time point of machining suspension in the first embodiment;
FIG. 4 is an explanatory view showing an example of a machining program used in second and third embodiments of the present invention;
FIGS. 5a and 5b are explanatory views showing an example of setting of macro variables used in the second and third embodiments;
FIG. 6 is a flowchart showing algorithm of execution processing of the machining program according to the second embodiment of the present invention;
FIG. 7 is a flowchart showing algorithm of processing in a dry running mode when the machining is resumed after machining suspension in the second embodiment of the present invention; and
FIG. 8 is a flowchart showing algorithm of processing in the dry running mode when the machining is resumed after machining suspension in the third embodiment of the present invention.

### DETAILED DESCRIPTION

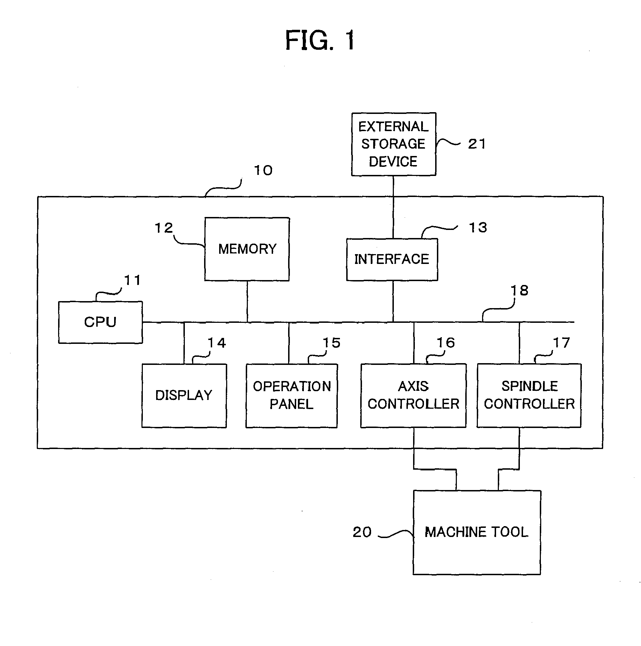

FIG. 1 is a schematic view of a numerical controller for controlling a machine tool according to an embodiment of the present invention. The numerical controller has the same hardware configuration as that of a conventional numerical controller for controlling a machine tool, so that the hardware configuration is schematically shown in FIG. 1. The numerical controller of the present invention differs from the conventional one in that software of execution processing of a machining program stored in a memory (storage means) is partially different in order to realize a machining resume function, and also in that software of an after-mentioned machining resume function is stored.

A numerical controller 10 has a memory (storage means) 12 connected to a processor (CPU) 11 through a bus 18, an interface 13, a display 14, an operation panel 15, an axis controller 16 for controlling a servomotor of each axis of a machine tool 20, and a spindle controller 17 for controlling a spindle motor of the machine tool 20.

The memory 12 is constructed of a ROM, a RAM, a nonvolatile memory (RAM), etc. The ROM stores a system program that controls the whole, and the nonvolatile memory stores various kinds of machining programs. Particularly in connection with the present invention, a program portion in which analysis execution is not carried out at the time of resuming machining is previously set and stored in the nonvolatile memory. The interface 13 is connected with an external storage device 21 for storing various kinds of machining programs and the like, and the machining programs can be read out by the processor.

The display 14 indicates the machining programs according to a command from a keyboard or the like which is installed in the operation panel 15. The axis controller 16 carries out position/velocity feedback control according to a move command given from the processor 11 to each axis on the basis of the machining programs and a position/velocity feedback signal from a position/velocity detector, not shown, installed in each servomotor, and drives the servomotor of each axis, to thereby control a position and velocity thereof. The spindle controller 17 controls the velocity of the spindle according to a spindle velocity command given from the processor 11.

According to each embodiment of the present invention, when the machining is resumed, the machining program is executed without operating a machine to restore an internal status of the numerical controller at the time point of machining suspension. There are unnecessary subprograms and blocks that are not required to be executed for restoration of the internal status.

In the machining programs, there are program portions for operations and commands other than those associated with the status in which a workpiece is machined with a tool, including a subprogram that sets machining conditions and carries out measurement, a macro program, programs of commands that are not directly associated with the actual machining, and the like. In these program portions, a tool position in relation to the workpiece may be sufficient if the internal status is restored using a position of the program portion before execution as a position at the time of resuming machining.

For example, if the subprogram for measuring the workpiece is read out from a machining main program to execute the measurement of the workpiece, since a position of the tool with respect to the workpiece before starting the subprogram is identical to a subprogram end position, it is useless to carry out analysis of the subprogram at the time of machining resume processing. It is pointless to run analysis of the program that is not directly related to the machining and is unnecessary to execute for restoring the internal status of the numerical controller at the time point of machining suspension. The program portions that are useless for restoring the internal status of the numerical controller at the time point of machining suspension can be previously recognized from contents of the subprogram and commands.

Therefore, in the first embodiment of the present invention, a program portion in which subprograms and blocks unnecessary to execute for restoring the internal status are to be skipped is set in the memory 12 by parameter setting or by a signal from outside through a communication interface, not shown, or the like. The program portion is set and stored in skipped-program-portion storage means of the memory 12 as a program portion in which a subprogram number, a macro program number, a sequence number, a given interval indicated by the sequence number, and also a G code number (preparatory function code number), an M code number (miscellaneous function number), and the like, which are not directly associated with the machining, are to be skipped.

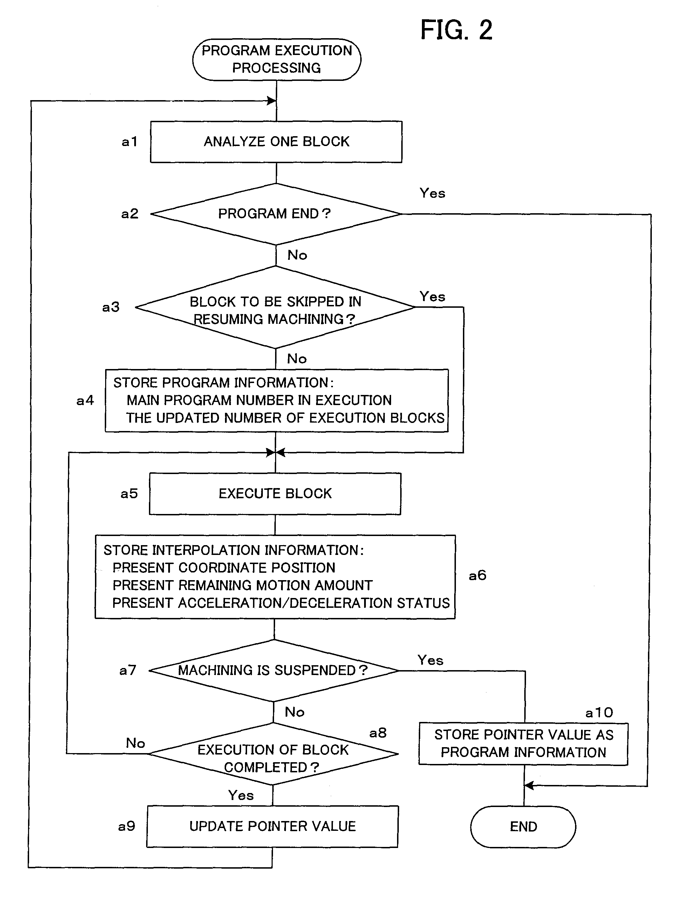

FIG. 2 is a flowchart of algorithm of machining program execution processing during a regular running mode that is executed by the processor (CPU) 11 of the numerical controller 10 according to the first embodiment. FIG. 2 chiefly shows sections related to the machining resume function.

First, one block corresponding to a value of the pointer is read out from the machining program and analyzed, and execution data is prepared (Step a1). The pointer is reset to "0" at initial setting when the execution processing of the machining program is started. If a command of the block that has been read out is a program end command (Step a2), the program execution processing is ended. If the command is not the program end command, it is determined as to whether the block is the program portion to be skipped when resuming the machining, which is registered in the memory 12 (Step a3). If the block is the program portion to be skipped, the procedure advances to Step a5.

When it is determined that the block is not the program portion to be skipped which is registered in the memory, a main program number in execution and the number of execution blocks are stored in a program-information memory section after being incrementally increased by one as program information (Step a4). The memory section for storing the number of execution blocks is reset to "0" at the initial setting when the machining program is started.

Next, according to execution data that is obtained by analyzing a program block in Step a1, the program block is executed. In other words, the spindle velocity command outputs a velocity command to the spindle controller 17. A command to move the tool with respect to the workpiece executes interpolation processing in every given interpolation cycle according to the execution data, outputs a command to move to each axis to the axis controller 16, and drives the servomotor of each axis (Step a5). Every time the interpolation processing is ended, a present coordinate position, a remaining motion amount of a motion amount that is commanded in the block, and a present acceleration/deceleration status (type of acceleration/deceleration control, such as linear acceleration/deceleration, bell-shaped acceleration/deceleration, and exponential acceleration/deceleration) are stored in an interpolation information memory section as interpolation information (Step a6). A determination is made as to whether the machining is suspended for some reason (Step a7) and whether the processing commanded in the block is completed (Step a8). If the machining is not suspended, and the processing commanded in the block is not completed, the processing of Steps a5 to a8 is executed in each interpolation cycle. If the machining is not suspended, and the interpolation execution processing of the block is completed during the interpolation execution processing, a pointer indicative of a block position of a following program to be read is updated by incrementally increasing the value thereof by one (Step a9), and the procedure then returns to Step a1. Hereinafter, the processing of Steps a1 to a9 is executed until the program is ended, and the numerical controller controls the machine tool according to the machining program, to thereby machine the workpiece.

If the operation of the machine tool is stopped for some reason in the middle of the machining, and the machining is suspended (Step a7), the pointer value is stored in the program-information memory section as storage of program information (Step a10).

The program-information memory section stores the executed main program number and the value of the pointer at the time point of machining suspension, and also the number of execution blocks not to be skipped when the machining is resumed. The interpolation information memory section stores as interpolation information a coordinate position of the machine, a remaining motion amount, and an acceleration/deceleration status when the interpolation processing is executed in an interpolation cycle immediately before the suspension of the machining, and each axis is driven.

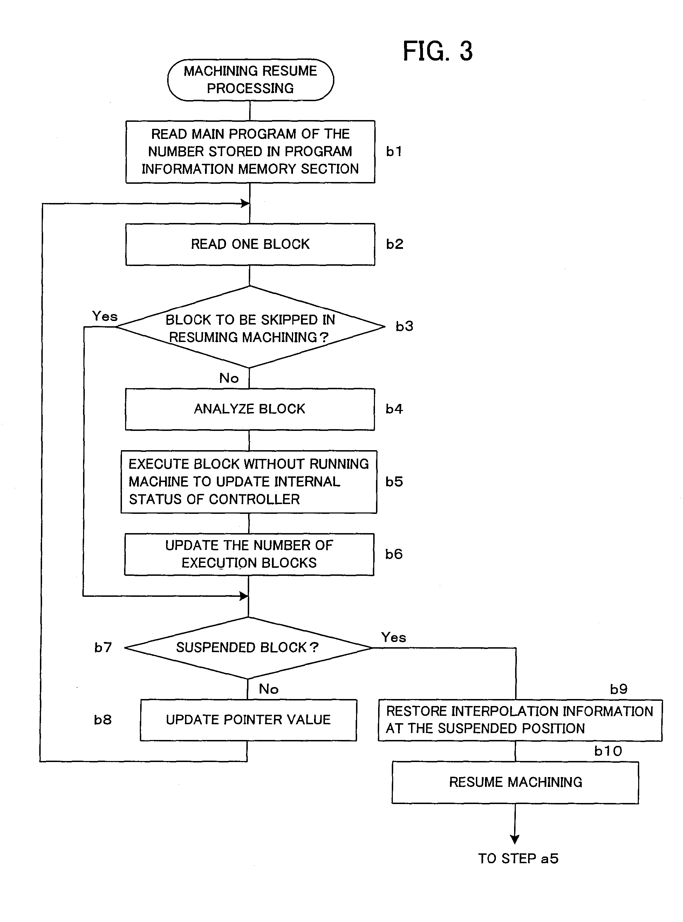

FIG. 3 is a flowchart showing algorithm of machining resume processing when the machining is resumed after machining suspension according to the first embodiment. Especially the processing of restoring the internal status of the numerical controller to the one at the time point of machining suspension is mainly illustrated.

When the machining resume command is inputted, the processor 11 of the numerical controller 10 first reads the main program of the main program number stored in the program-information memory section in Step a4 shown in FIG. 2 from the nonvolatile memory section to be stored in the RAM (Step b1), and reads the block indicated by the pointer value from the program (Step b2). The pointer is reset to "0" at first at the initial setting of the machining resume processing. It is determined whether or not the read block is registered as a program portion to be skipped in resuming the machining (Step b3). If the block is registered to be skipped, the procedure advances to Step b7. If not, an analysis of the block is carried out and execution data are prepared (Step b4), and a so-called dry running is carried out in which the machining program is executed without actually running the machine (Step b5). Thus, the interpolation processing is performed according to the block execution data, and processing of updating the internal status including the coordination position of the machine, the remaining motion amount, the acceleration/deceleration status, etc. is performed. In the dry running, the motion amount of each axis, the coordinate position of the machine, and the like are obtained by implementing the interpolation processing. However, a command of the obtained motion amount of each axis is not outputted to the axis controller 16, and the servomotor of each axis is not driven. Therefore, the machine tool remains in a suspended status.

When the execution of the block is completed, a value of a register storing the number of execution blocks to be executed in the machining resume processing is incrementally increased by "1" to be updated (Step b6). The procedure then moves to Step b7. It is determined in Step b7 whether the block is the suspended block. If the block is not the suspended block, the pointer is updated (Step b8). The procedure then returns to Step b2, and processing in and after Step b2 is carried out.

Until the read-out block reaches the suspended block that has been stored, the processing from Step b2 to Step b8 is repeated. Regarding a determination in Step b7 of the present embodiment as to whether the suspended block is reached, it is determined that the machining suspension block is reached if the number of execution blocks stored in the program-information memory section in Steps a4 and a9 of FIG. 2 and the pointer value of the program information coincide respectively with the number of execution blocks obtained in Step b6 and the pointer value in the machining resume processing (value updated in Step b8). It may be determined that the execution of the program in the dry running mode is advanced up to the suspended block simply by the agreement of the pointer value or agreement of the number of execution blocks. In the present embodiment, however, a determination is made as to whether the machining suspension block is reached by the number of blocks not to be skipped (value of the number of execution blocks) and the number of blocks from the beginning of the program (value of the pointer).

When the processing reaches the block in which the machining has been suspended, the internal status including the coordinate position, the remaining motion amount, and the acceleration/deceleration status in the interpolation information stored in the interpolation information memory section in Step a6 of FIG. 2 is restored in the numerical controller (Step b9), and the machining is resumed (Step b10). The procedure returns to Step a5 of FIG. 2, and subsequently executes the machining program, to thereby perform the machining.

When Step b7 determines that the block in which the machining has been suspended is reached, the pointer value indicates the block in which the machining suspension has been caused. In Step b9, the interpolation information stored in the interpolation information memory section is restored as the internal status. As a result, a position where the machining is suspended in the machining suspension block (position where the processing of the interpolation processing cycle is completed, and the motion amount of each axis of the cycle is outputted to the servomotor of each axis) is restored. Therefore, at the time of resuming the machining, the interpolation processing is executed from the restoring position, and the processing in and after Step a5 of FIG. 2 is carried out. When the interpolation processing of the machining suspension block is completed, the pointer value is updated in Step a9, and the processing is started from the following block by the processing in and after Step a1.

If the determination as to whether the suspended block at the time of resuming the machining is reached is made only by the pointer value, there is no need to count the number of execution blocks. Accordingly, the processing of Steps a3 and a4 of FIG. 2 and the processing of Step b6 of FIG. 3 are not indispensable. The main program number may be stored as program information together with the pointer value in Step a10.

According to the first embodiment, it is sufficient if there are provided for the machining resume function, a skipped-program-portion storage section that previously sets the subprogram number, the sequence number and the like of the program portion to be skipped without carrying out the block of the program in the processing of restoring the internal status at the time of resuming the machining after machining suspension, the program-information memory section that stores the program information including the main program number, the pointer value and the number of execution blocks, and the interpolation information memory section that stores the coordinate position of the machine, the remaining motion amount, and the acceleration/deceleration status. The storage amount is small, and it is not necessary to particularly increase the memory capacity. The program portion unnecessary to execute for restoring the internal status of the numerical controller at the time point of machining suspension is skipped instead of being analyzed and executed, and the internal status of the numerical controller at the machining suspension is restored. This makes it possible to avoid wasteful processing and restore the internal status of the numerical controller at the time point of machining suspension in a short time.

Second and third embodiments of the present invention will be described below, in which programming is carried out to determine a program portion unnecessary to execute at the time of resuming the machining so that the portion is skipped at the time of resuming the machining.

According to the first embodiment, when the machining is suspended and is later resumed, in order to skip the needless subprogram and block unnecessary to execute, the skipped subprogram number, the macro program number, the sequence number, the given interval indicated by the sequence number and the like are previously set and stored in the memory. In the second and third embodiments, however, the program portion unnecessary to execute at the time of resuming the machining is not set in the memory but is included with the program so as to be identified, and the portion is skipped when the machining is resumed.

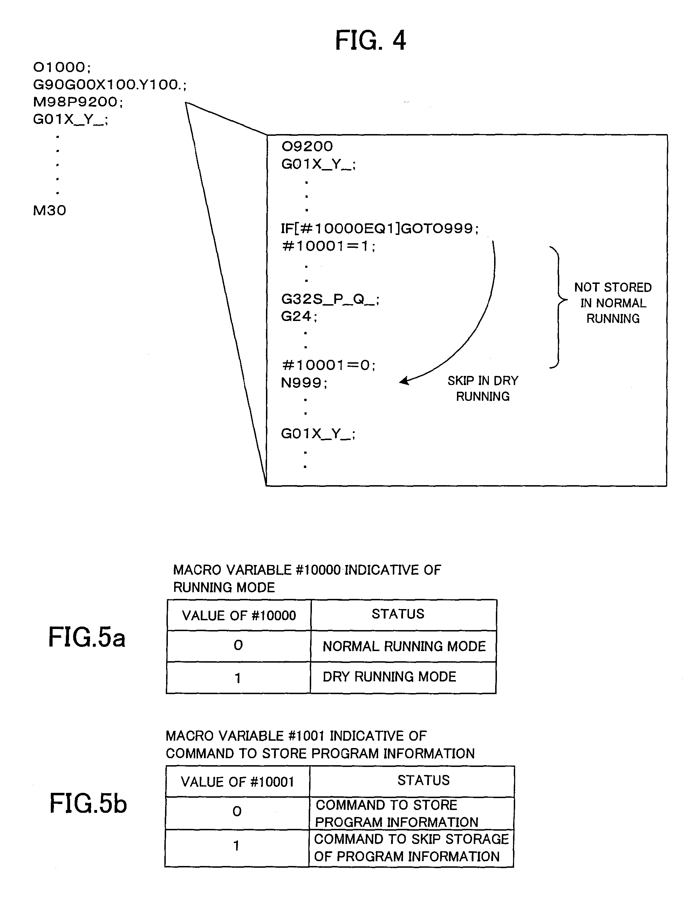

FIG. 4 is an explanatory view of an example of a machining program used in the second and third embodiments.

The example of the machining program reads out and executes a subprogram in the middle of run and repeatedly executes the program.

In FIG. 4, "O1000" indicates that the program number is "1000". It is commanded to read out a subprogram under the program number "9200" from a main program under the program number "1000" by code "M98" to execute the subprogram, and to repeatedly run the machining program by a command "M30" (end of program and rewind) that is shown at the end of the main program.

In the above-mentioned subprogram, there is a program portion unnecessary to execute when the machining is resumed after machining suspension. It is commanded to skip and not to execute the above portion when the machining is resumed. According to the example shown in FIG. 4, "IF[#10000EQ1]GOTO999" is a skip command, which commands to skip to a position under the sequence number "999" when a macro variable "#10000" is "1." The interval to be skipped is the program portion unnecessary to execute when the machining is resumed.

In the second and third embodiments, there is provided a memory section that stores information for distinguishing a status of a regular running mode in which the numerical controller carries out program execution for regular machining from a status of a dry running mode in which the machining program is executed without operating the machine when the machining is suspended in the midst of the machining program, and the machining is resumed from where the machining is suspended. The present embodiments show an example in which the statuses are stored in a macro variable.

FIG. 5a shows an example of setting of the macro variable "#10000" indicative of statuses of the running modes. If the macro variable "#10000" is set to "0," the mode is the regular running mode. If the macro variable is set to "1," the status of the dry running mode at the time of resuming the suspended machining is designated.

In the second embodiment, when the program is executed in the regular running mode that carries out the regular machining, only with respect to a block other than a block to be skipped in the dry running mode at the time of resuming the machining, a pointer value of the block, the number of execution blocks and the like are stored as program information. To that end, a determination as to whether the program information is stored is set in the memory. In the present embodiment, this is also set in a macro variable. FIG. 5b shows an example of setting of a macro variable "#10001" for determining whether or not the program information is stored. If the macro variable is set to "0," the program information is stored. If the macro variable is set to "1," the program information is skipped instead of being stored.

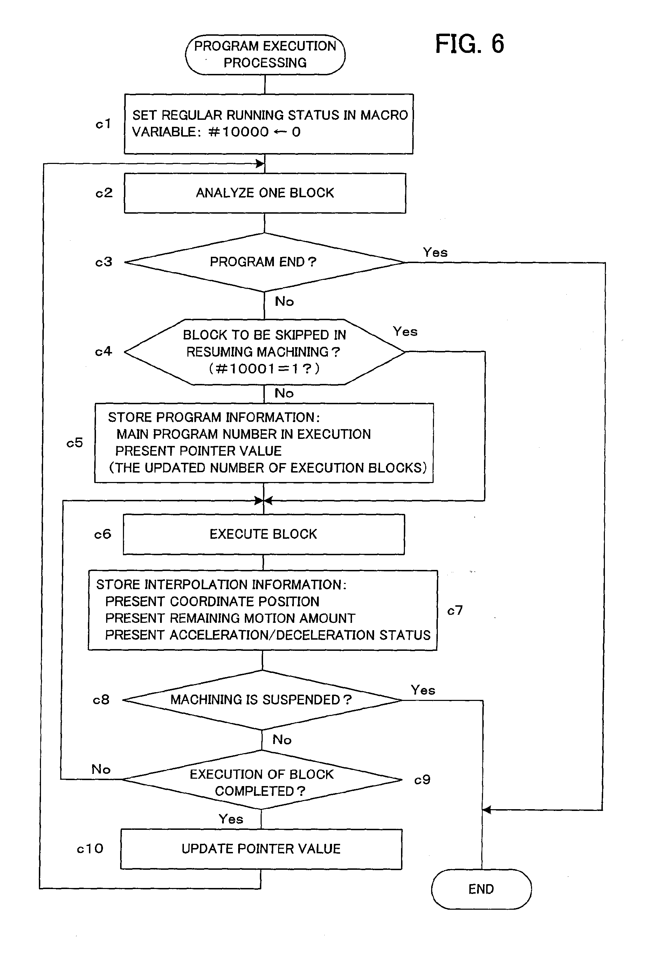

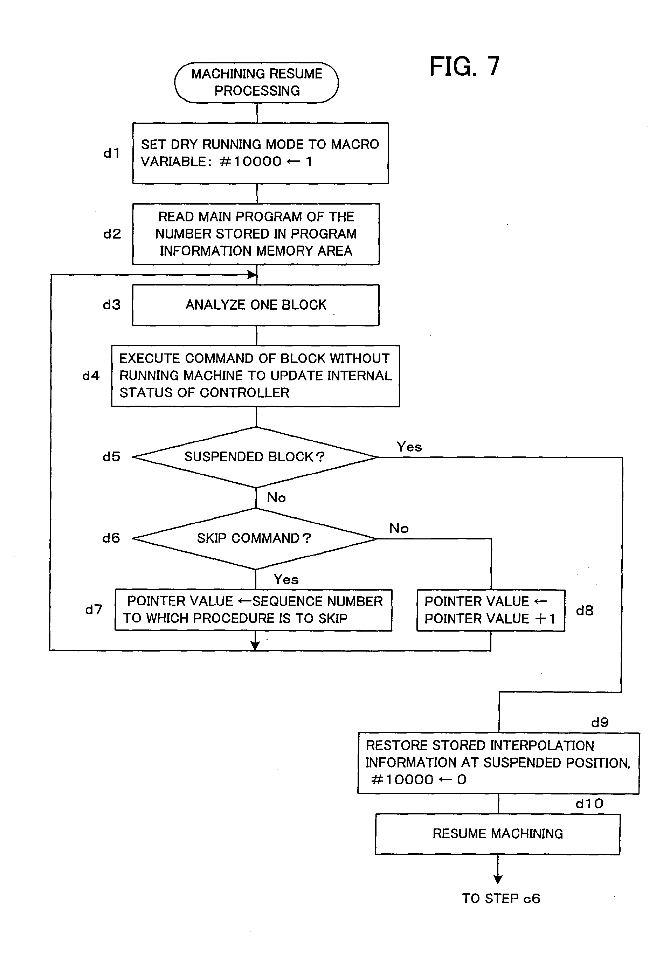

FIG. 6 is a flowchart of algorithm of processing of executing the machining program during operation in the regular running mode according to the second embodiment of the present invention. FIG. 7 is a flowchart showing algorithm of processing during operation in the dry running mode at the time of resuming the machining after the machining is suspended according to the second embodiment.

In the case of the regular machining, the processor (CPU) 11 of the numerical controller 10 executes the processing shown in FIG. 6.

First, the macro variable "#10000" is set to "0" to store that the running mode is the regular running mode (Step c1). One block is read out from the beginning of the machining program and analyzed (Step c2), and a determination is made as to whether a command of the block commands to end the program (Step c3). If the command is a program end command, the processing is ended. If not, the macro variable "#10001" is set to "1," and it is determined whether the block is to be skipped in the dry running mode at the time of resuming the machining (Step c4). The macro variable "#10001" is set to "0."

If the macro variable "#10001" is set to "1," the procedure advances to Step c6. If the macro variable "#10001" is set to "0," the main program number in execution, the present pointer value and the number of execution blocks updated by incrementally increased by "1" are stored as program information in the program-information memory section (Step c5), and the procedure moves to Step c6. It is the third embodiment where the number of execution blocks needs to be stored. In the second embodiment, it is not required to store the number of execution blocks. Therefore, FIG. 6 shows "the updated number of execution blocks" in parentheses.

Processing that is commanded in the block is executed (Step c6). If the command is a move command, interpolation processing is carried out, and a distribution motion amount is outputted to the axis controller 16. Then, the servomotor of each axis is driven and controlled, to thereby perform the machining. Each time the interpolation processing is completed, a present coordinate position, the remaining motion amount in the motion amount which is commanded in the block, and a present acceleration/deceleration status are stored as interpolation information in the interpolation information memory section (Step c7). A determination is made as to whether the machining is suspended for some reason (Step c8) and whether the processing commanded in the block is completed (Step c9). If the machining is not suspended, and the processing commanded in the block is not completed, the processing of Steps c6 to Step c9 is executed in each interpolation cycle. If the interpolation execution processing of the block is completed without machining suspension during the interpolation execution processing, the pointer value indicative of a block position of the program to be read next is updated (Step c10), and the procedure returns to Step c2. Subsequently, the processing of Steps c2 to c10 is carried out until the end of the program. The numerical controller 10 controls the machine tool and machines a workpiece according to a machining program.

If Step c8 determines that the operation of the machine tool is stopped in the middle of the machining for some reason, and that the machining is suspended, the processing is ended. However, the main program number in execution, the pointer value of the block of the execution program, and the counted value of the number of execution blocks to be executed instead of being skipped in the dry running mode at the time of resuming the machining are stored as program information in the program-information memory section of the memory 12 at the point of time when the machining is suspended. The interpolation information memory section of the memory 12 stores as interpolation information the coordinate position, the remaining motion amount, and the acceleration/deceleration status at the time point when the machining is stopped.

Referring to the example of the program shown in FIG. 4 to explain the program execution processing in the regular machining shown in FIG. 6, the macro variable "#10000" is set to "0" in Step c1. Therefore, if the block of "IF[#10000EQ1]GOTO999" in the program is processed, the processing does not skip to the sequence number "999," and a command of each block is executed. During the skipping, the macro variable "#10001" is set to "1." For the duration before the setting is restored to "0" (skip interval), the procedure moves from Step c4 to Step c6. The processing of Step c5 is not carried out, and the program information in blocks of this interval is not stored.

Accordingly, the program information is obtained by storing the information of the block to be executed in the dry running mode at the time of resuming the machining. As the number of execution blocks, blocks to be executed in the dry running mode at the time of resuming the machining are counted up in the regular running mode at the regular machining.

If a machining resume command is inputted to the numerical controller when the machining is resumed after the machining is suspended in the middle of the machining, processing of FIG. 7 is started in the second embodiment.

The macro variable "#10000" is set to "1" to set that the running status is in the dry running mode for resuming the machining (Step d1). Subsequently, the main program under the main program number stored in the program-information memory section in Step c5 of FIG. 6 is read out from a nonvolatile memory section into the RAM (Step d2), and is read out from the block indicated by the pointer value by the program and analyzed (Step d3). The pointer is initially reset to "0" at the initial setting of the machining resume processing. The execution data is prepared on the basis of the analysis of the block. The dry-running operation is carried out without running the machine, and the internal status is updated (Step d4). In other words, as in the first embodiment, the interpolation processing is implemented according to the block execution data. Only the processing of updating the internal status including the coordinate position of the machine, the remaining motion amount, the acceleration/deceleration status and the like is carried out. A command of the obtained motion amount of each axis is not outputted to the axis controller 16, and the servomotor of each axis is not driven. Consequently, the machine tool is in a suspended status.

In the next place, a determination is made as to whether the block is a suspended block (Step d5). If the block is not the suspended block, the processing of updating the pointer is carried out. FIG. 7 shows the processing of updating the block pointer in detail. Specifically, it is determined whether the command of the block is a skip command to skip a block such as "IF[#10000EQ1]GOTO999" of FIG. 4 (Step d6). If the command of the block is the skip command, the sequence number to which the procedure is commanded to skip is set in the pointer, and a block to be executed next is designated (Step d7). If the command is not the skip command, the pointer is incremented by "1" (Step d8). Steps d6 to d8 are the processing of updating the pointer. The pointer updating processing of Step a9 shown in FIG. 2 and Step b8 shown in FIG. 3 according to the first embodiment and that of Step c10 shown in FIG. 6 according to the second embodiment are the same as the updating processing of Steps d6 to d8.

In this manner, the pointer is updated, and the procedure returns to Step d3, which reads and analyzes the block indicated by the pointer. The processing of Steps d3 to d8 is then executed, and the dry-running operation is then performed without operating the machine. Once the pointer value coincides with the one stored as program information, and the suspended block is reached, the procedure moves from Step d5 to Step d9. The internal status including the coordinate position, the remaining motion amount, and the acceleration/deceleration status in the interpolation information which are stored in the interpolation information memory section is restored in the numerical controller. The macro variable "#10000" is set to "0," and the mode is switched from the dry running mode to the regular running mode that performs the machining (Step d9). The machining is resumed (Step d10), the procedure returns to Step c6 of FIG 6. Subsequently, the machining program is carried out, to thereby perform the machining.

When the machining is suspended, in the program-information memory section, there is stored the pointer value indicative of the block in which the machining is suspended. If the suspension occurs in the block to be skipped in the dry running mode at the time of resuming the machining, there is stored the pointer value indicative of a block in which the skipping is commanded which is programmed before the above-mentioned block. In the interpolation information memory section, there is stored the interpolation information such as the coordinate position, the remaining motion amount, and the acceleration/deceleration status in the interpolation information at the time point of machining suspension. Accordingly, when the pointer has the pointer value stored in the program-information memory section during the processing in which the machine is not operated in the dry running mode at the time of resuming the machining, the numerical controller is brought into the internal status including the coordinate position, the remaining motion amount and the acceleration/deceleration status in the interpolation information which are stored in the interpolation information memory section. By so doing, the internal status becomes the one at the time point of machining suspension, and the machining may be resumed in this status.

In the regular running mode, if the machining is suspended during execution of the block to be skipped in the dry running mode at the time of resuming the machining, the program-information memory section stores the pointer value indicative of the block in which the skipping is commanded. However, the block to be skipped at the time of resuming the machining is set with respect to the program portion for operations and commands other than those associated with the status in which the workpiece is machined with a tool, including a subprogram that sets machining conditions and carries out measurement, a macro program, programs of commands that are not directly related to the actual machining, and the like as described above. Therefore, an internal status that indicates a machining position and the like is the same as the internal status in the block where the skipping is commanded and the internal status at the time point when the processing is suspended. Accordingly, by recovering the above internal status, the status at the time point of the machining suspension can be restored.

For example, in the example of the program shown in FIG. 4, when the machining is suspended in a block of "G32S P Q ;," the pointer value of the block of "IF[#10000EQ1]GOTO999" immediately before the skipping is executed in the dry running mode at the time of resuming the machining is stored as program information in the second embodiment. During the operation in the dry running mode at the time of resuming the machining, when the pointer value indicative of the block of "IF[#10000EQ1]GOT0999" is reached, it is determined to be the point of the machining suspension. This is because the internal status of the numerical controller immediately before the skipping is carried out is not changed during the interval of the program portion to be skipped.

According to the second embodiment, the number of execution blocks is not used to make a determination as to whether the block is the suspended block in the processing of resuming the machining. For this reason, it is not required in the second embodiment to store the number of execution blocks as program information in Step c5 of FIG. 6.

The third embodiment will described below, which determines the block in which the machining is suspended using the number of execution blocks instead of the pointer value.

In the third embodiment, the processing in the regular machining is shown in FIG. 6. The third embodiment differs from the second embodiment only in that the processing of counting up and storing the number of execution blocks, which is shown in parentheses, is carried out in Step c5.

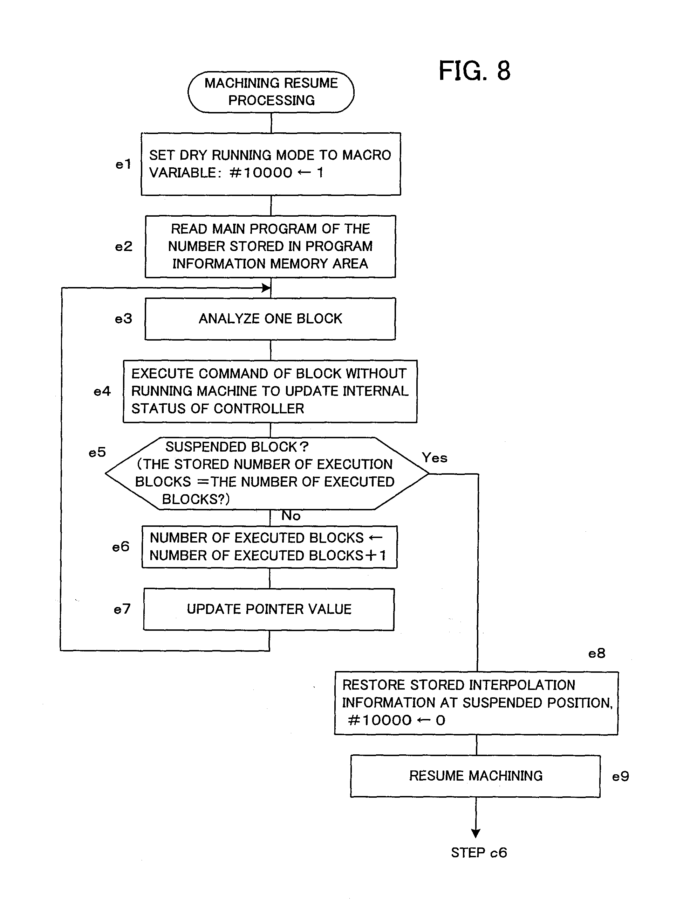

FIG. 8 is a flowchart showing algorithm of processing in the dry running mode of the resuming of the machining when the machining is resumed after machining suspension in the third embodiment.

The processing in the dry running mode when the machining is resumed after machining suspension according to the third embodiment differs from the second embodiment in that the determination processing of Step e5 which determines whether or nor the block in execution is the suspended block, and in that the processing of Step e6 which counts the number of executed blocks in the dry running mode for resuming the machining is added.

In other words, the processing of Steps e1 to e4 is identical to that of Step d1 to d4 of the processing shown in FIG. 7 of the second embodiment. According to the third embodiment, it is determined whether or not the block in execution is the block in which the machining is suspended based on the number of execution blocks which has been stored as the program information (Step e5). The number of executed blocks is counted (Step e6), and the pointer updating processing is performed (Step e7). The procedure then returns to Step e3. The detail of the pointer updating processing is shown in the processing of Steps d6 to d8 of FIG. 7. When the suspended block is determined, the program of Steps e3 to e7 is carried out without running the machine. The operation in the dry running mode which analyzes the command of each block and updates the internal status is stopped. In the same manner as in the processing of Steps d9 and d10 of the second embodiment, the internal status including the coordinate position, the remaining motion amount, and the acceleration/deceleration status in the interpolation information stored in the interpolation information memory section is restored in the numerical controller. The macro variable "#10000" is set to "0," and the dry running mode is switched to the regular running mode for performing the machining (Step e8), to thereby resume the machining (Step e9). The procedure returns to Step c6 of FIG. 6, and the machining program is subsequently executed, thereby performing the machining.

## Claims

1. A numerical controller for controlling a machine tool to perform machining according to a machining program, having a function of resuming the machining from a position where the machining is suspended, said numerical controller comprising:
skip-information storage means storing skip information indicative of blocks of the machining program unnecessary to be executed for restoring an internal status of the numerical controller at the time when the machining is suspended;
interpolation-information storing means for storing information on interpolation performed according to a command of the block in execution in the machining program;
dry-running means for successively executing commands of blocks other than the blocks indicated by the skip information stored by said skip-information storage means from beginning of the machining program without running the machine tool to the block in which the machining program is suspended, in response to a machining resume command after the suspension of the machining; and
means for restoring the information on interpolation stored by said interpolation-information storing means and resuming the machining when the execution of the machining program by said dry-running means is completed to the block in which the machining program is suspended.

2. A numerical controller according to claim 1, wherein the skip information stored in said skip-information storage means includes a sequence number and/or a subprogram number.

3. A numerical controller for controlling a machine tool to perform machining according to a machining program, having a function of resuming the machining from a position where the machining is suspended, said numerical controller comprising:
skip-information storage means storing skip information indicative of blocks of the machining program unnecessary to be executed for restoring an internal status of the numerical controller at the time when the machining is suspended;
program-information storing means for storing information on the machining program in execution;
interpolation-information storing means for storing information on interpolation performed according to a command of the block in execution in the machining program;
skip-block determination means for determining whether or not a block read from the machining program is to be skipped based on the skip information stored in said skip-information storage means;
dry-running means for successively reading blocks of the machining program indicated by the information stored by said program-information storing means from beginning of the machining program and executing commands of blocks other than the blocks determined to be skipped by said skip-block determination means without running the machine, in response to a machining resume command after the suspension of the machining;
suspended-block determination means for determining whether or not the execution of the machining program by said dry-running means is completed to the block in which the machining is suspended based on the information stored by said program-information storing means; and
interpolation-information restoring means for restoring the information on interpolation stored by said interpolation-information storing means when it is determined by said suspended-block determination means that the execution of the machining program by said dry-running means is completed to the block in which the machining is suspended,
wherein the machining is resumed based on information on the suspended block and the information on interpolation restored by said interpolation-information restoring means.

4. A numerical controller according to claim 3, wherein the information stored by said program-information storing means includes a main program number in execution, a pointer value indicative of the block in execution and the number of blocks other than the blocks to be skipped determined by said skip-block determination means.

5. A numerical controller according to claim 3, wherein the skip information stored in said skip-information storage means includes a sequence number and/or a subprogram number.

6. A numerical controller for controlling a machine tool to perform machining according to a machining program in which blocks to be skipped in a dry-running mode are designated, having a function of resuming the machining from a point where the machining is suspended, said numerical controller comprising:
program-information storing means for storing information on machining program in execution;
interpolation-information storing means for storing information on interpolation performed according to a command of a block in execution in the machining program;
means for storing a status of the dry-running mode in which the machining program is executed without running the machine tool so as to resume the machining after the suspension of the machining;
suspended-block determination means for determining whether or not the machining program is executed to the block in which the machining is suspended, in the dry-running mode after the suspension of the machining;
dry-running means for successively reading blocks of the machining program indicated by the information stored by said program-information storing means from beginning of the machining program and executing the read blocks in the dry-running mode while skipping the blocks designated to be skipped by the machining program to the block in which the machining is suspended, which is determined by said suspended-block determination means, in response to a machining resume command after the suspension of the machining;
interpolation-information restoring means for restoring the information on interpolation stored by said interpolation-information storing means when the execution of the machining program by said dry-running means is completed to the block in which the machining is suspended; and
machining resuming means for resuming the machining by switching the dry-running mode to a regular running mode after the information on interpolation is restored by said interpolation-information restoring means.

7. A numerical controller according to claim 6, wherein said program-information storing means stores a pointer value indicative of the block in execution only when the block other than the blocks designated to be skipped is executed in regular running mode, and said suspended-block determination means determines the block in which the machining is suspended based on the stored pointer value.

8. A numerical controller according to claim 6, wherein said program-information storing means stores in the regular running mode the number of blocks other than blocks designated to be skipped, and said suspended-block determination means determines the block in which the machining is suspended based on the number of blocks stored by said program-information storing means and the number of blocks executed in the dry-running mode.
